# EUROPÄISCHE PATENTANMELDUNG

(11) **EP 0 805 412 A1**
(43) Veröffentlichungstag der Anmeldung: **05.11.1997**
(21) Anmeldenummer: 97105657.7
(22) Anmeldetag: 05.04.1997
(51) Int. Cl.: G06K 11/08

(54) **Steuereinrichtung, insbesondere für die Steuerung von Maschinen**

(30) Priorität: 02.05.1996 DE 29607920 U
(71) Anmelder: Zabel GmbH, 47800 Krefeld (DE)
(72) Erfinder: Zabel, Klaus, 47803 Krefeld (DE)
(74) Vertreter: Stark, Walter, Dr.-Ing.

(57) **Zusammenfassung**

Die Erfindung betrifft eine Steuereinrichtung, insbesondere für die Steuerung von Maschinen, mit einem in einem Gehäuse gelagerten und relativ zu diesem bewegbaren Steuerelement. Um eine Steuereinrichtung anzugeben, die ein direktes Erfassen der Auslenkung des Steuerelementes ohne eine mechanische Übertragung der Auslenkung auf ein erfassendes Bauteil ermöglicht sowie eine hohe Erfassungsgenauigkeit gewährleistet, wobei die Steuereinrichtung schmutzunanfällig und verschleißfrei ist, soll die Relativbewegung zwischen Gehäuse und Steuerelement durch wenigstens eine Kombination aus zumindest einer Sende- und Empfangseinheit einerseits sowie einer damit korrespondierenden Fläche andererseits erfaßt werden, wobei die korrespondierende Fläche reflektierende und nicht bzw. weniger refektierende Abschnitte aufweist und die Sende- und Empfangseinheit einerseits sowie die korrespondierende Fläche andererseits wechselseitig entweder in dem Gehäuse oder in dem Steuerelement vorgesehen sind.

## Beschreibung

Die Erfindung betrifft eine Steuereinrichtung, insbesondere für die Steuerung von Maschinen, mit einem in einem Gehäuse gelagerten und relativ zu diesem bewegbaren Steuerelement.

Derartige Einrichtungen werden heutzutage in unterschiedlichen Bereichen der Technik, wie zum Beispiel bei Maschinen, Luftfahrzeugen, Fernsteuerungen, Rollstühlen oder auch Computern eingesetzt. Dabei gibt es grundsätzlich zwei Möglichkeiten, die Auslenkung des bewegten Steuerelementes zu erfassen.

Einerseits kann eine Auslenkung des Steuerelementes zunächst mechanisch auf ein weiteres Bauteil übertragen werden, durch das die Auslenkung elektrisch erfaßt wird. Diese Information wird dann zur Ansteuerung der entsprechenden Maschine etc. verwendet. Als Nachteil erweist sich dabei, daß die Erfassung der Auslenkung aufgrund der mechanischen Übertragung, der hohen Schmutzempfindlichkeit und der Verschleißerscheinungen nur ungenau erfolgt.

Andererseits kann das Steuerelement auch so ausgebildet sein, daß zumindst ein Teil der zur Auslenkungserfassung benötigten Erfassungseinrichtung in das Steuerelement integriert ist, so daß eine "direkte" Erfassung der Auslenkung möglich ist. Hierbei kann dieser integrierte Teil zum Beispiel ein Magnet sein, der zwischen ortsfest angebrachten Spulen ausgelenkt wird. Das durch die ausgelenkte Lage des Magneten veränderte Magnetfeld wird durch die Spulen erfaßt und als Steuersignal verwendet. Da die Änderungen der Induktivität durch das verlagerte Magnetfeld nicht linear proportional zur Auslenkung des Steuerelements sind und somit keine genaue analoge Steuerung zulassen, muß das analoge Signal über eine Filter- und Umwandlungselektronik in ein digitales Signal umgewandelt werden.

Ferner kann ein Teil des Steuerelementes der bewegbare Teil eines Ventils sein, so daß durch Auslenkung des Steuerelementes "direkt" Einfluß auf eine hydraulische oder pneumatische Steuerung genommen werden kann. Nachteilig hierbei ist jedoch, daß zum einen die Steuerung nicht mit der gewünschten Präzision erfolgen kann und zum anderen die Entfernung zwischen Steuereinrichtung und dem zu steuernden Bauteil mittels Schläuchen überbrückt werden muß.

Aufgabe der Erfindung ist es, eine Steuereinrichtung anzugeben, die ein direktes Erfassen der Auslenkung des Steuerelementes ohne eine mechanische Übertragung der Auslenkung auf ein erfassendes Bauteil ermöglicht sowie eine hohe Erfassungsgenauigkeit gewährleistet, wobei die Steuereinrichtung schmutzunanfällig und verschleißfrei ist.

Diese Aufgabe wird dadurch gelöst, daß die Relativbewegung zwischen Gehäuse und Steuerelement durch wenigstens eine Kombination aus zumindest einer Sende- und Empfangseinheit einerseits sowie einer damit korrespondierenden Fläche andererseits erfaßt wird, wobei die korrespondierende Fläche reflektierende und nicht bzw. weniger reflektierende Abschnitte aufweist und die Sende- und Empfangseinheit einerseits sowie die korrespondierende Fläche andererseits wechselseitig entweder in dem Gehäuse oder dem Steuerelement vorgesehen sind. Unter wechselseitig im Sinne der Erfindung ist dabei zu verstehen, daß jeweils das eine der beiden Elemente (Sende- und Empfangseinheit einerseits oder korrespondierende Fläche andererseits) in dem Gehäuse und das andere Element auf dem Steuerelement vorgesehen ist.

Die Sende- und Empfangseinheit sendet Lichtsignale aus, die - sofern sie auf einen reflektierenden Abschnitt der korrespondierenden Fläche treffen - reflektiert werden. Wird das Steuerelement in Bewegung gesetzt, so treffen die ausgesandten Lichtsignale abwechselnd auf reflektierende und nicht bzw. weniger reflektierende Abschnitte und werden dementsprechend nur von den reflektierenden Abschnitten zurückgestrahlt. Die Wechsel zwischen den reflektierten Lichtsignalen und den Pausen, wo das Lichtsignal auf einen nicht bzw. weniger reflektierenden Abschnitt trifft und somit nicht reflektiert wird, werden von der Sende- und Emfangseinheit erfaßt. Die so erhaltenen Impulse können dann zur Steuerung der Maschinen verwendet werden.

Um die Fehlerwahrscheinlichkeit der Steuereinrichtung zu verringern, können die Sende- und Empfangseinheiten jeweils doppelt für eine Bewegungsrichtung angeordnet sein. Über eine Elektronik können diese miteinander verglichen werden. Bei abweichenden Werten kann z. B. interpoliert werden oder aber eine Fehlermeldung herausgegeben werden. Die Anordnung der reflektierenden und der nicht bzw. weniger reflektierenden Abschnitte auf der korrespondierenden Fläche kann dem späteren Anwendungsbereich entsprechend ausgebildet sein (z. B. Abmessungen der einzelnen Abschnitte, lineare, logarithmische oder anders geartete Anordnung der Abschnitte, etc.).

Zweckmäßigerweise kann (können) die korrespondierende(n) Fläche(n) an einem als Steuerelement dienenden bewegbaren Steuerknüppel vorgesehen sein und die Sende- und Empfangseinheit(en) an dem ortsfesten Gehäuse angebracht sein. Dabei kann entweder die korrespondierende Fläche zwischen der Sende- und Empfangseinheit bewegt werden oder aber außen um die innenliegende Sende- und Empfangseinheit herum. Vorteilhaft bei der Ausführungsform, bei der die korrespondierende Fläche die Sende- und Empfangseinheit von außen umschließt, ist eine einfache Abschirmung der Sende- und Empfangseinheit gegen Umwelteinflüsse und somit auch gegen Verschmutzungen. Eine derartige Ausbildung der Steuereinrichtung erlaubt eine Anwendung als Joystick zum Beispiel bei Maschinen oder Luftfahrzeugen. Der Steuerknüppel kann dabei in verschiedene Richtungen ausgelenkt werden, wodurch die reflektierenden und nicht bzw. weniger reflektierenden Abschnitte der korrespondierenden Fläche in der Lage verändert werden und entlang der ortsfesten Sende- und Empfangseinheit laufen.

Bei einer anderen Ausführungsform kann (können) die Sende- und Empfangseinheit(en) an einem als Steuerelement dienenden bewegbaren Steuerknüppel angebracht sein und die korrespondierende(n) Fläche(n) an dem ortsfesten Gehäuse vorgesehen sein.

Bei einer anderen bevorzugten Ausführungsform der Erfindung ist das Steuerelement eine Kugel oder eine Hohlkugelhälfte, die als korrespondierende auslenkbare Fläche der (den) ortsfest am Gehäuse befestigten Sende- und Empfangseinheit(en) gegenübersteht. Bei einer rotationssymmetrischen Anordnung von reflektierenden und nicht bzw. weniger reflektierenden Abschnitten auf der Außenfläche der Kugel oder auf der Innenfläche der Hohlkugelhälfte kann der Steuerknüppel sogar drehbar gelagert sein, ohne daß ein Verdrehen des Steuerknüppels einen Einfluß auf die erfaßte Auslenkung hat. Ferner wird eine fertigungsintensive Verdrehsicherung überflüssig und bei der Montage entfällt ein aufwendiges Ausrichten des Steuerknüppels.

Um eine Steuerung einer weiteren Funktion zu ermöglichen, kann der Steuerknüppel eine Einrichtung zum unabhängigen Betätigen einer dritten Sende- und Empfangseinheit oder einer korrespondierenden Fläche aufweisen, die ihrerseits mit einer ortsfesten korrespondierenden Fläche bzw. einer ortsfesten Sende- und Empfangseinheit zusammenarbeitet. So kann zum Beispiel durch Drehen eines in dem Steuerknüppel befindlichen Elementes, an dessen unteren Ende eine dritte Sende- und Empfangseinheit oder eine korrespondierende Fläche vorgesehen ist, eine weitere Funktion gesteuert werden. Dabei kann sich der für diese Steuerfunktion relevante Flächenbereich ebenfalls auf der Kugelaußenfläche bzw. auf der Innenfläche der Hohlkugelhälfte befinden und analog zu den vorgenannten Flächen aus reflektierenden und nicht bzw. weniger reflektierenden Abschnitten bestehen.

Im folgenden wird ein in den Zeichnungen dargestelltes Ausführungsbeispiel der Erfindung erläutert; es zeigen:
- Fig. 1: einen Schnitt durch eine erfindungsgemäße Steuereinrichtung,
- Fig. 2: eine Ansicht schräg von unten einer geschnittenen Steuereinrichtung.

In den Figuren werden für gleiche oder gleichartige Teile die gleichen Bezugzeichen verwendet.

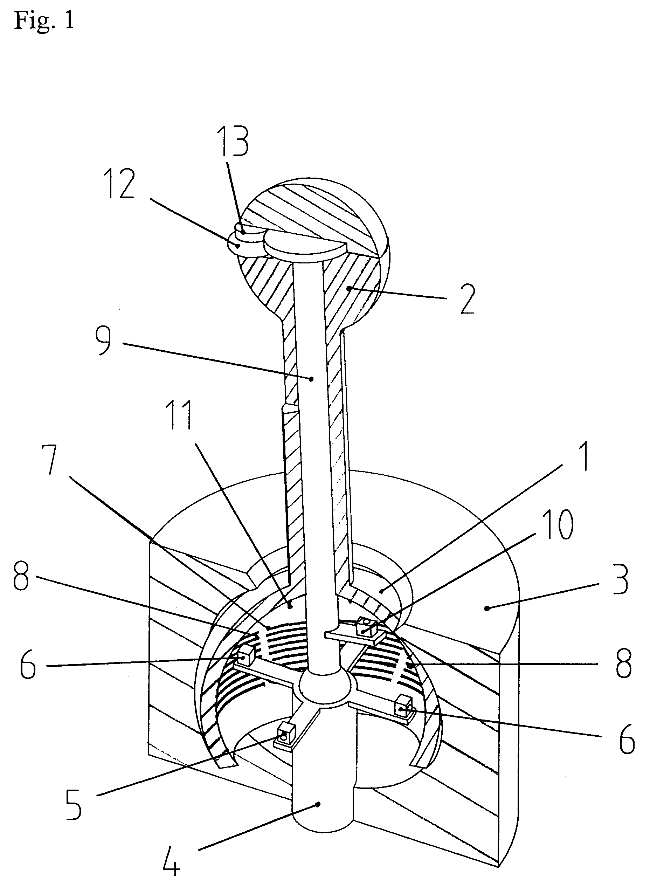

Fig. 1 zeigt eine Steuereinrichtung bestehend aus einem Steuerelement 1 und einem daran befestigten Steuerknüppel 2. Das Steuerelement 1 ist als nach unten geöffnete Kugel ausgebildet, die beweglich in einem Gehäuse 3 gelagert ist. Innenseitig weist das Gehäuse 3 einen ortsfesten Ständer 4 auf, an dem jeweils zwei gegenüberliegende Sende- und Empfangseinheiten 5 und hierzu um 90 ° verschoben zwei gegenüberliegende Sende- und Empfangseinheiten 6 montiert sind.

Innenseitig weist das Steuerelement 1 zu den Steuer- und Empfangseinheiten 5, 6 mehrere korrespondierende Flächen 7, 8 auf. Es ist aber auch durchaus denkbar, daß die korrespondierenden Flächen 7 und 8 nicht einzeln unterteilt, sondernbeispielsweise als umlaufender Kugelabschnitt ausgebildet sind.

Innerhalb des Steuerknüppels 2 ist eine Stange 9, die von außen verstellt werden kann, drehbar auf dem Ständer 4 gelagert. Oberhalb der Lagerung der Stange 9 auf dem Ständer 4 aber noch innerhalb des Steuerelementes 1 ist an der Stange 9 eine weitere Sende- und Empfangseinheit 10 vorgesehen, die mit einer weiteren korrespondierenden Fläche 11 auf der Innenseite des Steuerelementes 1 zusammenarbeitet. Durch Drehen eines Drehknopfes 12 bewirkt dieser über eine seitliche Verzahnung 13 gleich eines Getriebes, die kontrollierte Rotation der Stange 9 und somit der Sende- und Empfangseinheit 10.

Durch eine Rasteinheit wird ein unbeabsichtigtes Drehen der Stange 9 verhindert.

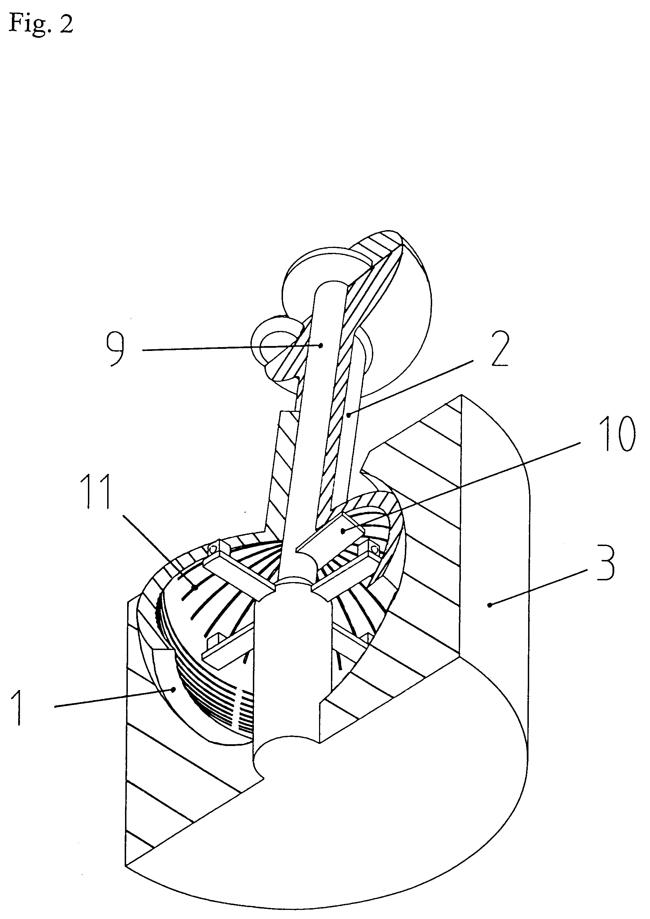

Fig. 2 stellt den in dem Gehäuse 3 verdrehbaren Steuerknüppel 2 von unten dar, wodurch die korrespondierende Fläche 11 der Sende- und Empfangseinheit 10 besser dargestellt ist. Bei Verdrehen der Stange 9 wird die Sende- und Empfangseinheit 10 mitgedreht, so daß die reflektierenden und nicht bzw. weniger reflektierenden Abschnitte der korrespondierenden Fläche 11 abgetastet und gezählt werden. Dabei wird das Steuerelement 1 selbst nicht mitverdreht.

## Patentansprüche

1. Steuereinrichtung, insbesondere für die Steuerung von Maschinen, mit einem in einem Gehäuse (3) gelagerten und relativ zu diesem bewegbaren Steuerelement (1), dadurch gekennzeichnet, daß die Relativbewegung zwischen Gehäuse (3) und Steuerelement (1) durch wenigstens eine Kombination aus zumindest einer Sende- und Empfangseinheit (5 bzw. 6 bzw. 10) einerseits sowie einer damit korrespondierenden Fläche (7 bzw. 8 bzw. 11) andererseits erfaßt wird, wobei die korrespondierende Fläche (7 bzw. 8 bzw. 11) reflektierende und nicht bzw. weniger reflektierende Abschnitte aufweist und die Sende- und Empfangseinheit (5 bzw. 6 bzw. 10) einerseits sowie die korrespondierende Fläche (7 bzw. 8 bzw. 11) andererseits wechselseitig entweder in dem Gehäuse (3) oder dem Steuerelement (1) vorgesehen sind.

2. Steuereinrichtung nach Anspruch 1, dadurch gekennzeichnet, daß die korrespondierende(n) Fläche(n) (7 bzw. 8 bzw. 11) an einem als Steuerelement (1) dienenden bewegbaren Steuerknüppel (2) vorgesehen ist (sind) und die Sende- und Empfangseinheit(en) (5 bzw. 6 bzw. 10) an dem ortsfesten Gehäuse (3) angebracht ist (sind).

3. Steuereinrichtung nach Anspruch 1, dadurch gekennzeichnet, daß die Sende- und Empfangseinheit(en) (5 bzw. 6 bzw. 10) an einem als Steuerelement (1) dienenden bewegbaren Steuerknüppel (2) angebracht ist (sind) und die korrespondierende(n) Fläche(n) (7 bzw. 8 bzw. 11) an dem ortsfesten Gehäuse (3) vorgesehen ist (sind).

4. Steuereinrichtung nach einem der Ansprüche 1 bis 3, dadurch gekennzeichnet, daß das Steuerelement (1) eine Kugel oder eine Hohlkugelhälfte ist.

5. Steuereinrichtung nach Anspruch 4, dadurch gekennzeichnet, daß der Steuerknüppel (2) eine Einrichtung zum unabhängigen Betätigen einer dritten Sende- und Empfangseinheit (10) oder einer korrespondierenden Fläche (11) aufweist, die ihrerseits mit einer ortsfesten korrespondierenden Fläche (11) bzw. einer ortsfesten Sende- und Empfangseinheit (10) zusammenarbeitet.
